# EUROPÄISCHE PATENTSCHRIFT

(11) **EP 1 417 876 B1**
(45) Veröffentlichungstag und Bekanntmachung des Hinweises auf die Patenterteilung: **13.06.2007**
(21) Anmeldenummer: 03024273.9
(22) Anmeldetag: 23.10.2003
(51) Int. Cl.: A01B 63/22

(54) **Einstellsystem**
Adjusting system
Système de réglage

(30) Priorität: 25.10.2002 US 281443
(43) Veröffentlichungstag der Anmeldung: 12.05.2004
(73) Patentinhaber: DEERE & COMPANY, Moline, Illinois 61265-8098 (US)
(72) Erfinder: Steinlage, David Lee, Adel IA 50003 (US); Mosdal, Brian Thomas, Ankeny IA 50021 (US); Noonan, James Thomas, Bondurant IA 50035 (US); Goins, Garrett Lee, Ankeny IA 50021 (US); Royer, Anthony Scott, Minburn IA 50167 (US); Payne, David Alan, Urbandale IA 50322 (US)
(74) Vertreter: Holst, Sönke

(56) Entgegenhaltungen:
- DE-C- 866 862
- DE-C- 948 200
- US-A- 5 366 024

## Beschreibung

Die Erfindung betrifft ein Einstellsystem für ein Gerät, insbesondere Bodenbearbeitungsgerät, mit einer hydraulisch ansteuerbaren Hubvorrichtung, die mit einem Rahmen verbunden und zum Heben und Senken des Rahmens einsetzbar ist, und mit einem einfahrbaren und ausfahrbaren Zylinder, wobei der Zylinder eine Zylinderachse definiert, einem mit der Hubvorrichtung verbundenen Hebegestänge, einer Schwenkanordnung für den Zylinder, in der der Zylinder zwischen dem Rahmen und dem Hebegestänge derart angeordnet ist, dass durch Einfahren und Ausfahren des Zylinders die Höhe des Gerätes einstellbar ist, wobei der Zylinder durch eine stangenseitige Anschlussvorrichtung schwenkbar mit einem Hebearm und durch eine bodenseitige Anschlussvorrichtung schwenkbar mit einer Halterungsanordnung für den Zylinder verbunden ist, einem Steuerventil, welches eine Öffnungsstellung und eine Schließstellung aufweist und einer Ventilöffnungsvorrichtung, welche zum Einfahren und Ausfahren des Zylinders betreibbar ist, um das Steuerventil zur Festlegung einer ausgewählten Rahmenposition in eine entsprechende Stellung zu bringen, wobei die Ventilöffnungsvorrichtung ein Kontaktelement enthält, welches sich entlang eines linearen Pfads parallel zur Zylinderachse und direkt mit dem Einfahren und Ausfahren des Zylinders gekoppelt bewegt, und wobei die Ventilöffnungsvorrichtung ein Führungselement aufweist, welches von wenigstens einer Anschlussvorrichtung verschiebbar gehalten wird, wobei das Steuerventil auf dem Pfad liegt und durch Bewegen des Kontaktelements in eine Schließstellung bringbar ist, um die ausgewählte Rahmenposition festzulegen.

Landwirtschaftliche Geräte mit hydraulisch betätigten Tiefen-oder Hebesystemen enthalten oft Tiefeneinstellsysteme wie sie z. B. in der US 5,427,184 A und in der US 5,988,293 A offenbart sind. Ein typisches System enthält ein Ventil, welches angesteuert wird, um vertikale Bewegungen des Rahmens zu stoppen, wenn das Werkzeug in eine vorgewählte Arbeitsposition abgesenkt wird.

Viele hydraulisch gesteuerte landwirtschaftliche Geräte benutzen ein Ein-Punkt-Tiefeneinstellsystem, bei dem die Tiefe des Gerätes an einer einzigen Stelle des Gerätes überwacht und eingestellt wird. Normalerweise ist eine Stößelhalteranordnung verschiebbar auf einer mit einer Schwenkwelle des Gerätes verbundenen Steuerstange montiert. Ein Stößel an der Anordnung aktiviert ein Tellerventil, um einen Flüssigkeitsfluss zu den hydraulischen Hubzylindern zu unterbrechen, wenn eine vorgewählte Tiefeneinstellung erreicht wird. Um die Tiefe einzustellen, wird eine Einstellschraube an der Stößelhalteranordnung gelöst und die Stößelhalterung entlang der Steuerstange verschoben. Die Einstellschraube wird festgezogen, um die Stößelhalteranordnung an der gewünschten Stelle auf der Steuerstange zu sichern. Normalerweise ist das Maß einer Tiefeneinstellung sehr gering. Wenn die Einstellschraube gelockert ist, dann sitzt die Stößelhalteranordnung lose auf der Steuerstange und verrutscht auf der Steuerstange, oftmals an eine falsche Stelle. Die Stößelhalteranordnung muss dann manuell bewegt und die Tiefeneinstellung per Augenmaß bestimmt werden. Wenn die Einstellschraube festgezogen wird, dann verschiebt sich oftmals die Stößelhalteranordnung. Mehrere Versuche können erforderlich sein, um die gewünschte Position einzustellen. Aus diesen Gründen ist die Tiefeneinstellung oftmals ungenau, schwer wiederholbar und zeitaufwändig.

Bei einer anderen Art von Tiefeneinstellung, welche in der US 5,427,184 A offenbart ist, ist eine längliche Kurbel vorgesehen, mit der ein Gestänge eingestellt werden kann, welches einem Tiefeneinstellzylinder zugeordnet ist. Auch wenn eine derartige Vorrichtung den Vorteil hat, das Aus- und Einfahren des Zylinders direkt kontrollieren zu können, so sind die Ventil- und Gestängekomponenten komplizierter aufgebaut, teurer und schwer zugänglich, und stellen Gegenstände dar, die durch in das Gerät geratende Getreidepflanzen und Bodenpartikel beschädigt werden können. Eine weitere Art der Einstellung wird in der US 5,988,293 A offenbart. Auch wenn diese Arten von Einrichtungen einige mit Tiefeneinstellsystemen verbundene Probleme bewältigen konnten, erfordern die meisten von ihnen komplizierte und teure Gestänge, insbesondere wenn die Tiefeneinstellung in geeigneter Weise für den Betreiber angeordnet ist. Verschleiß und Hysteresefehler begrenzen die Tauglichkeit derartiger Anordnungen für genaue und wiederholbare Tiefeneinstellfunktionen.

Ein weiteres bekanntes Tiefeneinstellsystem ist in der DE 866 862 C2 offenbart. Das offenbarte Tiefeneinstellsystem umfasst einen Hubzylinder, mit dem über eine Schwenkanordnung die Laufräder eines Gerätes relativ zu einem Rahmen des Gerätes verstellbar angeordnet werden können. Ferner ist eine Steuervorrichtung vorgesehen, mit der eine hydraulische Regelung des Hubzylinders über ein am Hubzylinder angeordnetes Steuerventil zur wahlweisen Begrenzung des Kolbenhubs des Hubzylinders ermöglicht wird. Über einen Seilzug kann eine Verstellung eines Ventilschiebers zur hydraulischen Regelung der Tiefeneinstellung durch eine Bedienperson vorgenommen werden, wobei ein Schaltvorgang des Steuerventils über eine mit dem Seilzug verbundene Habelanordnung ausgelöst wird. Auch hier ist eine genaue und reproduzierbare Tiefeneinstellfunktion nur sehr begrenzt möglich.

Ein weiteres bekanntes Tiefeneinstellsystem ist in der US 5,366,024 A1 offenbart. Das offenbarte Tiefeneinstellsystem umfasst einen Hubzylinder, mit dem ebenfalls über eine Schwenkanordnung die Laufräder eines Gerätes relativ zu einem Rahmen des Gerätes verstellbar angeordnet werden können. Ferner ist auch hier eine Steuervorrichtung vorgesehen, mit der eine hydraulische Regelung des Hubzylinders über ein Steuerventil zur wahlweisen Begrenzung des Kolbenhubs des Hubzylinders ermöglicht wird. Hierbei wird über eine Verstellspindel in Verbindung mit einer Hebelanordnung eine Verstellung des Steuerventils zur hydraulischen Regelung der Tiefeneinstellung durch eine Bedienperson vorgenommen werden. Auch hier ist eine genaue und reproduzierbare Tiefeneinstellfunktion nur sehr begrenzt möglich.

Die der Erfindung zu Grunde liegende Aufgabe wird darin gesehen, ein Einstellsystem der eingangs genannten Art anzugeben durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein Einstellsystem der eingangs genannten Art derart ausgebildet, dass das Steuerventil und die Ventilöffnungsvorrichtung auf der Schwenkanordnung gelagert sind, wobei das Steuerventil von einer der Anschlussvorrichtungen gehalten wird und das Kontaktelement entlang dem Führungselement einstellbar montiert ist und zum Auslösen der Sperrstellung mit einem Ventilschalter in Eingriff tritt.

Erfindungsgemäß enthält das Einstellsystem ein Steuerventil und eine Ventilöffnungsvorrichtung, welche direkt in dem Schwenkbereich des höheneinstellenden hydraulischen Zylinders angeordnet sind. Die Schaltvorgänge des Steuerventils werden direkt durch die Bewegung des Zylinders gesteuert, ohne Verwendung von komplizierten Gestängen. Die Erfindung bietet den Vorteil, dass Baugröße und Fertigungskosten des Einstellsystems gegenüber herkömmlichen Systemen reduziert und Hysteresefehler im Wesentlichen überwunden werden. Des Weiteren ist ein erfindungsgemäßes Einstellsystem insbesondere auch für Ein-Punkt-Tiefeneinstellsysteme geeignet. Des

Weiteren wird gegenüber herkömmlichen Systemen eine verbesserte Reproduzierbarkeit bei Einstellungen, ein unkomplizierterer Aufbau, eine leichtere und kostengünstigere Fertigung und eine leichtere Zugänglichkeit geboten.

Anhand der Zeichnungen, die ein Ausführungsbeispiel der Erfindung zeigen, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine perspektivische Ansicht eines Bereichs eines Gerätes mit Höheneinstellsystem und
- Fig. 2: eine vergrößerte perspektivische Ansicht des Höheneinstellsystems des Geräts aus Fig. 1.

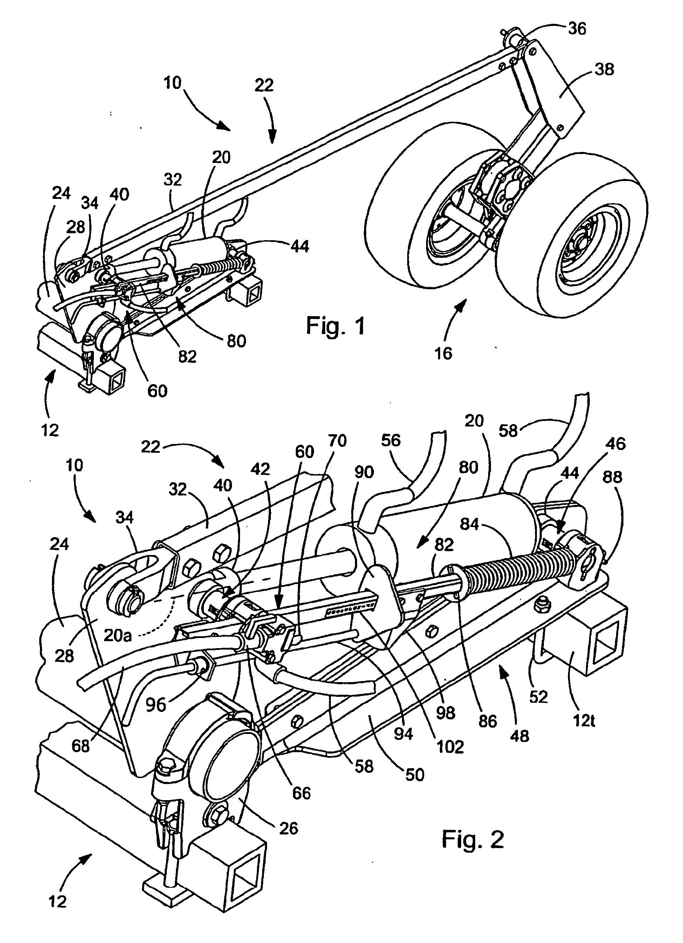

In den Figuren 1 und 2 ist ein Bereich eines landwirtschaftlichen Gerätes 10, mit einem Werkzeug tragenden Rahmen 12, welcher für Vorwärtsbewegungen über ein Feld durch eine Hubvorrichtung 16 für Räder getragen wird, dargestellt. Ein hydraulischer Zylinder 20 ist durch ein Hebegestänge 22 mit der Hubvorrichtung 16 verbunden, um wahlweise den Rahmen 12 anzuheben bzw. abzusenken. An dem Rahmen 12 können Werkzeuge (nicht gezeigt) montiert werden, die sich mit dem Rahmen vertikal zwischen einer Bodeneingriffsstellung und einer Transportstellung bewegen lassen. Eine Tiefeneinstellung für bodeneingreifende Elemente wird durch vertikale Bewegung des Rahmens 12 geschaffen.

Eine Schwenkwelle 24 erstreckt sich quer zur Vorwärtsrichtung der Bewegung des Gerätes und ist mittels einer Lagerblockanordnung 26 drehbar an den Rahmen 12 montiert. Ein um eine sich quer erstreckende Achse mit der Schwenkwelle 24 rotierender Hebel oder Hebearm 28 ist an der Schwenkwelle 24 befestigt und erstreckt sich dicht neben der Lagerblockanordnung 26 von der Schwenkwelle 24 aus in Aufwärtsrichtung. Das Hebegestänge 22 enthält eine Verbindungsstange 32, welche schwenkbar an einem vorderen Endbereich 34 mit dem Hebearm 28 verbunden ist. Die Stange 32 enthält einen hinteren Endbereich 36, welcher schwenkbar mit einem aufwärtsgerichteten Radhebearm 38 an der Hubvorrichtung 16 verbunden ist. Wenn der vordere Endbereich 34 der Stange 32 in Vorwärts- oder Rückwärtsrichtung bewegt wird, dann wird die Hubvorrichtung 16 relativ zum Rahmen 12 verschwenkt, um den Rahmen anzuheben bzw. abzusenken.

Der Zylinder 20 enthält eine Stangenseite 40, welche durch eine längliche Anschlussvorrichtung 42, rückwärtig und unterhalb der Schwenkverbindung am vorderen Endbereich 34 des Hebearms 28, schwenkbar mit dem Hebearm 28 verbunden ist. Der Zylinder 20 enthält eine Bodenseite 44, welche schwenkbar durch eine zweite Anschlussvorrichtung 46 mit einem hinteren Endbereich einer Halterungsanordnung 48 für den Zylinder 20 verbunden ist. Die Halterungsanordnung 48 enthält einen abgewinkelten Träger 50, mit einem vorderen Endbereich, welcher mit der Lagerblockanordnung 26 verbunden ist. Der hintere Endbereich der Halterungsanordnung 48 ist über eine U-förmige Bolzenanordnung 52 mit einem sich quer erstreckenden Rahmenträger 12t verbunden.

Die Stangen- und Bodenseiten des Zylinders 20 sind über hydraulische Leitungen 56 und 58 mit einer ansteuerbaren Hydraulikquelle verbunden, um den Zylinder 20 ein- bzw. auszufahren. Die bodenseitige Leitung 58 ist mit einem unten gelegenen Ausgang eines Steuerventils 60 verbunden, welches direkt an die stangenseitige Anschlussvorrichtung 42 montiert ist. Das Steuerventil 60 enthält einen in Vorwärtsrichtung gerichteten Einlass, welcher über ein handbetätigbares Schließventil 66 und einer Hydraulikleitung 68 mit der ansteuerbaren Hydraulikpumpe am Zugfahrzeug (nicht gezeigt) verbunden ist. Das Steuerventil 60 enthält einen außen vorgespannten Ventilschalter 70, welcher einen im Wesentlichen ungehinderten Hydraulikfluss zwischen der Bodenseite des Zylinders 20 und der Pumpe erlaubt, wenn er sich in der in Figur 2 gezeigten Stellung befindet. Der Ventilschalter 70 blockiert den Hydraulikfluss zwischen der Bodenseite und der Pumpe, wenn er entgegen der Vorspannung heruntergedrückt wird.
Das Schließventil 66 ist während Feldarbeiten normalerweise geöffnet, kann aber geschlossen werden, um den Zylinder 20 in einer vorgewählten Stellung abzuschalten, wie z. B. in einer ausgefahrenen Stellung während eines Transports des Geräts 10.

Eine Ventilöffnungsvorrichtung 80 wird von der Stangen- und Bodenseite 40 und 44 des Zylinders 20 getragen und enthält ein Rohr oder eine Führungsstange 82, welche verschiebbar von passenden Öffnungen in den Anschlussvorrichtungen 42, 46 aufgenommen wird. Zwischen der Anschlussvorrichtung 46 und einer Teller/Stift-Anordnung 86 an der Führungsstange 82 ist auf der bodenseitigen Seite der Führungsstange 82 eine Feder eingespannt, und ein Stift 88 am hinteren Endbereich verhindert ein Herausrutschen der Führungsstange 82 aus der Öffnung in der Anschlussvorrichtung 46. Der vordere Endbereich der Führungsstange 82 erstreckt sich frei verschiebbar durch die Öffnung der stangenseitigen Anschlussvorrichtung 42, wohingegen der hintere Endbereich der Führungsstange 82 relativ zum bodenseitigen Anschlussbereich 46 normalerweise fixiert bleibt. Im Falle eines Verkantens oder überhöhten Einfahrens des Zylinders 20 oder bei unsachgemäßer Einstellung der Ventilöffnungsvorrichtung 80, kann die Feder 84 sich zusammendrücken, so dass die Führungsstange 82 relativ zur Anschlussvorrichtung 46 in Rückwärtsrichtung zurückgeschoben wird, um ein Verbiegen oder Brechen der Ventilöffnungsvorrichtung 80 zu vermeiden.

Die Ventilöffnungsvorrichtung 80 enthält eine Platte oder ein Kontaktelement 90, welches verschiebbar auf der Führungsstange 82 gelagert ist. Eine Einstellstange 94 ist mittels einer vorderen Stangenlagerung 96 und einer hinteren Stangenlagerung 98 drehbar auf der Führungsstange 82 gelagert und verläuft unterhalb und parallel zur Führungsstange 82. Die Führungsstange 82 wird im Wesentlichen parallel zu einer Zylinderachse 20a geführt und verbleibt in einer parallelen Stellung zur Zylinderachse 20a während des Aus- und Einfahrens des Zylinders 20. Die Einstellstange 94 enthält einen mit einem Gewinde versehenen mittleren Bereich, welcher von einer an einem unteren Endbereich des Kontaktelements 90 angeordneten Gewindebohrung aufgenommen wird. Durch Drehen der Einstellstange 94 kann das Kontaktelement 90 auf der Führungsstange 82, entlang des mittleren Bereichs, verstellbar positioniert werden. Entlang des mittleren Bereichs sind Markierungen 102 vorgesehen, die einem Betreiber eine sichtbare Anzeige der eingestellten Stellung des Kontaktelements 90 liefern. Sobald der Zylinder 20, durch Öffnen der Hydraulikleitung 68 zu einem Hydraulikreservoir, eingefahren wird, wird der Rahmen 12 abgesenkt. Das Steuerventil 60 bewegt sich mitsamt der stangenseitigen Anschlussvorrichtung 42 relativ zum Kontaktelement 90 in Rückwärtsrichtung, wobei der vordere Endbereich der Führungsstange 82 sich durch die Anschlussvorrichtung 46 schiebt. Das Steuerventil 60 und das Kontaktelement 90 konvergieren gegeneinander auf einem im Wesentlichen geraden Pfad parallel zu der Zylinderachse 20a, bis das Kontaktelement 90 den Ventilschalter 70 herunterdrückt und den Hydraulikfluss von der Bodenseite des Zylinders 20 durch die Hydraulikleitung 58 blockiert, um eine eingestellte Position des Rahmens 12 in Abhängigkeit von der eingestellten Stellung des Kontaktelements 90 entlang der Führungsstange 82 festzulegen. Um den Rahmen abzusenken, beaufschlagt der Betreiber die Hydraulikleitung 68 mit Druck, indem er ein Steuerventil am Zugfahrzeug aktiviert, und eine Einweg-Rückschlagventileinrichtung (nicht gezeigt) im Steuerventil 60 ermöglicht den Einlass von Hydraulikflüssigkeit in die Bodenseite des Zylinders 20, um den Zylinder 20 auszufahren und den Rahmen 12 anzuheben.

## Patentansprüche

1. Einstellsystem für ein Gerät (10), insbesondere Bodenbearbeitungsgerät, mit einer hydraulisch ansteuerbaren Hubvorrichtung (16), die mit einem Rahmen (12) verbunden und zum Heben und Senken des Rahmens (12) einsetzbar ist, und mit:
- einem einfahrbaren und ausfahrbaren Zylinder (20), wobei der Zylinder (20) eine Zylinderachse (20a) definiert,
- einem mit der Hubvorrichtung (16) verbundenen Hebegestänge (22),
- einer Schwenkanordnung für den Zylinder (20), in der der Zylinder (20) zwischen dem Rahmen (12) und dem Hebegestänge (22) derart angeordnet ist, dass durch Einfahren und Ausfahren des Zylinders (20) die Höhe des Gerätes einstellbar ist, wobei der Zylinder (20) durch eine stangenseitige Anschlussvorrichtung (42) schwenkbar mit einem Hebearm (28) und durch eine bodenseitige Anschlussvorrichtung (46) schwenkbar mit einer Halterungsanordnung (48) für den Zylinder (20) verbunden ist,
- einem Steuerventil (60), welches eine Öffnungsstellung und eine Schließstellung aufweist und
- einer Ventilöffnungsvorrichtung (80), welche zum Einfahren und Ausfahren des Zylinders (20) betreibbar ist, um das Steuerventil (60) zur Festlegung einer ausgewählten Rahmenposition in eine entsprechende Stellung zu bringen, wobei die Ventilöffnungsvorrichtung (80) ein Kontaktelement (90) enthält, welches sich entlang eines linearen Pfads parallel zur Zylinderachse (20a) und direkt mit dem Einfahren und Ausfahren des Zylinders (20) gekoppelt bewegt, und wobei die Ventilöffnungsvorrichtung (80) ein Führungselement (82) aufweist, welches von wenigstens einer Anschlussvorrichtung (42, 46) verschiebbar gehalten wird,
wobei das Steuerventil (60) auf dem Pfad liegt und durch Bewegen des Kontaktelements (90) in eine Schließstellung bringbar ist, um die ausgewählte Rahmenposition festzulegen
**dadurch gekennzeichnet, dass** das Steuerventil (60) und die Ventilöffnungsvorrichtung (80) auf der Schwenkanordnung gelagert sind, wobei das Steuerventil (60) von einer der Anschlussvorrichtungen (42, 46) gehalten wird und das Kontaktelement (90) entlang dem Führungselement (82) einstellbar montiert ist und zum Auslösen der Sperrstellung mit einem Ventilschalter (70) in Eingriff tritt.

2. Einstellsystem nach Anspruch 1, **dadurch gekennzeichnet, dass** das Führungselement (82) parallel zum Zylinder (20) angeordnet gehalten wird.

3. Einstellsystem nach einem der Ansprüche 1 oder 2, **dadurch gekennzeichnet, dass** das Steuerventil (60) und die Ventilöffnungsvorrichtung (80) sich beim Einfahren und Ausfahren des Zylinders (20) relativ zueinander auf dem Pfad bewegen.

4. Einstellsystem nach einem der Ansprüche 1 bis 3, **dadurch gekennzeichnet, dass** das Führungselement (82) von der stangenseitigen Anschlussvorrichtung (42) verschiebbar aufgenommen wird.

5. Einstellsystem nach einem der Ansprüche 1 bis 4, **dadurch gekennzeichnet, dass** das Steuerventil (60) von der stangenseitigen Anschlussvorrichtung (42) gehalten wird.

6. Einstellsystem nach einem der Ansprüche 1 bis 5, **dadurch gekennzeichnet, dass** das Führungselement (82) derart ausgebildet ist, dass die Ventilöffnungsvorrichtung (80) relativ zum Schaltventil (60) einstellbar ist.

7. Einstellsystem nach einem der Ansprüche 1 bis 6, **dadurch gekennzeichnet, dass** zum Verstellen des Kontaktelements (90) ein Gewindeelement (94) enthalten ist, welches mit dem Führungselement (82) und dem Kontaktelement (90) verbunden ist.

8. Einstellsystem nach einem der Ansprüche 1 bis 7, **dadurch gekennzeichnet, dass** ein Federelement enthalten ist, welches das Kontaktelement (90) in Richtung des Steuerventils (60) vorspannt.

## Claims

1. An adjusting system for an implement (10), especially a ground working implement, with a hydraulically controllable lift device (16) which is connected to a frame (12) and can be used to raise and lower the frame (12), and with:
- a retractable and extensible cylinder (20), wherein the cylinder (20) defines a cylinder axis (20a),
- a lift linkage (22) connected to the lift device (16),
- a pivot arrangement for the cylinder (20), in which the cylinder (20) is so arranged between the frame (12) and the lift linkage (22) that the height of the implement can be adjusted by retracting and extending the cylinder (20), wherein the cylinder (20) is connected pivotally to a lift arm (28) through a rod end attachment device (42) and pivotally to a retaining arrangement (48) for the cylinder (20) through a bottom end attachment device (46),
- a control valve (60) which has an open position and a closed position, and
- a valve opening device (80) which is operable for retracting and extending the cylinder (20), in order to bring the control valve (60) into an appropriate position for establishing a selected frame position, wherein the valve opening device (80) includes a contact element (90) which moves along a linear path parallel to the cylinder axis (20a), coupled directly to the retraction and extension of the cylinder (20), and wherein the valve opening device (80) comprises a guide element (82) which is slidably retained by at least one attachment device (42, 46),
wherein the control valve (60) lies on the path and can be brought into a closed position by movement of the contact element (90), in order to establish the selected frame position,
**characterized in that** the control valve (60) and the valve opening device (80) are mounted on the pivot arrangement, wherein the control valve (60) is retained by one of the attachment devices (42, 44) and the contact element (90) is mounted adjustably along the guide element (82) and enters into engagement with a valve switch (70) to initiate the blocked position.

2. An adjusting system according to claim 1, **characterized in that** the guide element (82) is held in parallel arrangement to the cylinder (20).

3. An adjusting system according to either of claims 1 and 2, **characterized in that** the control valve (60) and the valve opening device (80) are movable relative to one another on the path on retraction and extension of the cylinder (20).

4. An adjusting system according to any of claims 1 to 3, **characterized in that** the guide element (82) is received slidably by the rod side attachment device (42).

5. An adjusting system according to any of claims 1 to 4, **characterized in that** the control valve (60) is held by the rod side attachment device (42)

6. An adjusting system according to any of claims 1 to 5, **characterized in that** the guide element (82) is so formed that the valve opening device (80) is adjustable relative to the control valve (60).

7. An adjusting system according to any of claims 1 to 6, **characterized in that** a threaded element (94) is included for adjusting the contact element (90) and is connected to the guide element (82) and the contact element (90).

8. An adjusting system according to any of claims 1 to 7, **characterized in that** a spring element is included and biases the contact element (90) in the direction of the control valve (60).

## Revendications

1. Système de réglage d'une machine (10), en particulier une machine de travail du sol, comportant un dispositif de levage (16), qui est destiné à être commandé par voie hydraulique et qui est assemblé à un bâti (12) et est destiné à être utilisé pour relever et abaisser le bâti (12), et comportant :
- un vérin (20) pouvant être rentré et extrait, le vérin (20) définissant un axe de vérin (20a),
- un ensemble de tiges de levage (22) assemblé au dispositif de levage (16),
- un système de pivotement pour le vérin (20), dans lequel le vérin (20) est monté entre le bâti (12) et l'ensemble de tiges de levage (22) de telle sorte que la hauteur de la machine peut être réglée par le mouvement de rentrée et d'extraction du vérin (20), le vérin (20) étant assemblé de manière pivotante avec un bras de levage (28) par l'intermédiaire d'un dispositif de couplage (42) du côté de la tige, et étant assemblé de manière pivotante, par l'intermédiaire d'un dispositif de couplage (46) du côté du fond, avec un système de support (48) pour le vérin (20),
- une vanne de commande (60), qui comporte une position d'ouverture et une position de fermeture, et
- un dispositif d'ouverture de la vanne (80), qui peut être utilisé pour rentrer et extraire le vérin (20), afin d'amener la vanne de commande (60) dans une position correspondante pour fixer le bâti dans une position sélectionnée, le dispositif d'ouverture de la vanne (80) comportant un élément de contact (90) qui se déplace le long d'un trajet linéaire parallèlement à l'axe du vérin (20a) et est couplé directement avec le mouvement de rentrée et d'extraction du vérin (20), et le dispositif d'ouverture de la vanne (80) comportant un élément de guidage (82) qui est maintenu de manière mobile en translation par au moins un dispositif de couplage (42, 46),
sachant que la vanne de commande (60) est située sur le trajet et peut être amenée dans une position de fermeture par le mouvement de l'élément de contact (90) pour fixer le bâti dans la position sélectionnée,
**caractérisé en ce que** la vanne de commande (60) et le dispositif d'ouverture de la vanne (80) sont montés sur le système de pivotement, la vanne de commande (60) étant maintenue par l'un des dispositifs de couplage (42, 46) et l'élément de contact (90) étant monté de manière réglable le long de l'élément de guidage (82) et entrant en contact avec un commutateur de vanne (70) pour débloquer la position de fermeture.

2. Système de réglage selon la revendication 1, **caractérisé en ce que** l'élément de guidage (82) est maintenu dans une orientation parallèle au vérin (20).

3. Système de réglage selon la revendication 1 ou 2, **caractérisé en ce que** la vanne de commande (60) et le dispositif d'ouverture de la vanne (80) se déplacent l'un par rapport à l'autre sur le trajet pendant le mouvement de rentrée et d'extraction du vérin (20).

4. Système de réglage selon l'une quelconque des revendications 1 à 3, **caractérisé en ce que** l'élément de guidage (82) est logé mobile en translation dans le dispositif de couplage (42) du côté de la tige.

5. Système de réglage selon l'une quelconque des revendications 1 à 4, **caractérisé en ce que** la vanne de commande (60) est maintenue par le dispositif de couplage (42) du côté de la tige.

6. Système de réglage selon l'une quelconque des revendications 1 à 5, **caractérisé en ce que** l'élément de guidage (82) est réalisé de telle sorte que le dispositif d'ouverture de la vanne (80) peut être réglé par rapport à la vanne de commande (60).

7. Système de réglage selon l'une quelconque des revendications 1 à 6, **caractérisé en ce que**, pour le réglage de l'élément de contact (90), il est prévu un élément fileté (94) qui est assemblé avec l'élément de guidage (82) et l'élément de contact (90).

8. Système de réglage selon l'une quelconque des revendications 1 à 7, **caractérisé en ce qu'**il est prévu un élément de ressort, par lequel l'élément de contact (90) est précontraint vers la vanne de commande (60).
